(19) Europäisches Patentamt
European Patent Office
Office européen des brevets

(11) **EP 4 682 754 A1**

(12) **EUROPEAN PATENT APPLICATION**

(43) Date of publication:
**21.01.2026  Bulletin 2026/04**

(21) Application number: **24197336.1**

(22) Date of filing: **29.08.2024**

(51) International Patent Classification (IPC):
**G06F 30/25** $^{(2020.01)}$  **G06F 111/10** $^{(2020.01)}$
**G06F 119/04** $^{(2020.01)}$

(52) Cooperative Patent Classification (CPC):
**G06F 30/25;** G06F 2111/10; G06F 2119/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.07.2024  BE 202405479**

(71) Applicant: **The Binding Energy
9050 Gent (BE)**

(72) Inventors:
• **Uyttenhove, Wim
9050 Gent (BE)**
• **Ramoisiaux, Eliott
9050 Gent (BE)**
• **Van Dyck, Daan
9050 Gent (BE)**

(74) Representative: **Patentales BV
Vennenbos 1A
9840 De Pinte (BE)**

(54) **IMPROVED DETERMINATION OF ACTIVATION VALUES**

(57)     The invention provides, amongst other aspects, a method of determining at least one activation value of at least one material from among a plurality of materials comprised in an object extending within a reference volume, wherein the material is capable of being activated by a radiation source present in the reference volume, wherein the object defines an object volume, wherein the method comprises: defining a digital volume based on the object volume; splitting a portion of the digital volume into first sub-volumes; determining at least one of the first sub-volumes based on predetermined first activation values and/or predetermined first fluence values; splitting the at least one of the first sub-volumes into second sub-volumes; performing transport computations to determine second fluence values in the second sub-volumes; and performing second activation computations to determine the at least one activation value of the at least one material in the second sub-volumes based on the determined second fluence values.

Fig. 1

## Description

### Field of the invention

The present invention relates to the technical domain of dose optimization and/or end-of-life decommissioning, particularly to determining a respective at least one activation value of at least one material based on a plurality of materials comprised in an object extending within a reference volume.

### Background art

Radiation-related facilities or sites, such as nuclear power plants, medical institutions (e.g., hospitals performing nuclear medicine, nuclear imaging, proton and radiotherapy, etc.), and research centers, that use radiation sources or experience particle radiation often require activation studies, e.g., for dose optimization, decommissioning of activated material, detecting hazards and/or safety issues, design of nuclear installation, etc. Such activation studies are essential before installation of at least one of the radiation source, object (e.g., wall), and the facility/site and/or are essential throughout the lifetime of at least one of the radiation source, the object, and the facility/site. The accurate determination of activation values within a volume, particularly in complex geometries, is essential to ensure safe handling and disposal of activated materials and the safety of people working in the facility/site, e.g. during or after the use of radiation sources, in environments with activated materials, during maintenance of radiation sources or equipment which can be activated, during displacement of nuclear waste, etc.

The accurate determination of activation values within a volume is critical for ensuring the safe management of radiation-related facilities/sites. However, current methods for determining activation values have limitations that make them less effective in complex geometries. Current methods for determining activation values often rely on simplified models or assumptions, which can lead to inaccurate predictions and inadequate risk assessments. This can result in unnecessary safety precautions, increased costs, and additional decommissioning processes. Moreover, due to the complexity of accurately determining activation, current methods often neglect some variables in models, which can lead to under characterization of radiation. This can result in inadequate/incomplete safety precautions and unsafe configurations.

In recent years, advances in computational power and simulation techniques have enabled the development of more sophisticated methods for modeling radiation transport and interaction with materials. However, these approaches often require significant computational resources and may not be practical for large-scale or complex models, since developing such models blindly (e.g., as a black box, with limited understanding of the underlying mechanisms and/or without the influence of existing theories) may be challenging and may require significant computational resources and expertise.

One example of prior art in this field is CN115130363A, which describes an automated method for refining a Monte Carlo particle transport program model. The goal is to automatically subdivide a specific area within the model with a given level of precision. While this approach provides some improvements over traditional methods, it has limitations in terms of accuracy and scalability.

As a result, there exists a need for an improved method of determining activation values that accurately reflects the actual geometry and material composition of complex volumes, in a more efficient way.

These challenges highlight the need for improved methods that can overcome these limitations.

The present invention aims at addressing issues, such as the issues mentioned above.

### Summary of the invention

According to a first aspect, the present invention provides a (computer-implemented) method of respectively determining at least one activation value of at least one material which is based on one or more materials, preferably based on a plurality of materials, comprised in (at least a part of) an object, wherein (the at least part of) the object extends within a reference volume, wherein the at least one material is capable of being activated by a radiation source present in the reference volume, wherein the method comprises:

- defining a digital volume of the object;
- splitting a portion of the digital volume into first sub-volumes based on information of the radiation source;
- determining (at least one portion of) at least one of the first sub-volumes, respectively for splitting based on predetermined first activation values and/or predetermined first fluence values;
- splitting the determined (at least one portion of the) at least one of the first sub-volumes, respectively, into second sub-volumes;
- performing one or more second transport computations to determine second fluence values in the second sub-volumes, respectively, wherein preferably the determined second fluence values consist of or comprise second differential fluence spectra; and
- performing second activation computations to determine the at least one activation value of the at least one material, respectively, in the second sub-volumes based on the determined second fluence values, preferably based on the determined second differential fluence spectra, respectively.

The aim of prior art document CN115130363A is to find a modelling solution for a complex system by subdividing and refining cells in a specified area according to a given precision. Thus, the prior art document describes optimizing the statistics of Monte Carlo calculations. However, the prior art document does not disclose improving the determining of activation by splitting (e.g., dividing and sub-dividing) the digital volume of an object. The present invention can reduce the amount of transport computations and/or activation computations by first performing a "coarser" first splitting of the digital volume into first sub-volumes based on the source information (e.g., type, direction, size, etc. of the radiation source), which focuses on the first sub-volumes having the highest probability of including activated material. Therefore, by determining at least one of the first sub-volumes for "finer" second splitting based on a more complex methodology, which couples fluence study and activation related parameters, the method of the invention may advantageously provide an optimized splitting of the digital volume for targeted activation determination. Particularly, by performing the first and second splitting, the method can provide a more effective and accurate activation determination.

In embodiments, wherein (the at least part of) the object defines an object volume, wherein the step of defining a digital volume is based on the object volume.

In particularly advantageous embodiments, the method comprises performing first transport computations to determine the first fluence values in the first sub-volumes, respectively, wherein the first fluence values comprise first differential fluence spectra and/or first total fluence values; and performing first activation computations to determine the first activation values of the one or more materials and/or of isotopes of the one or more materials, respectively, in one of the first sub-volumes based on a respective one of the determined first fluence values having the highest fluence value, preferably based on a respective one of the first total fluence values having the highest total fluence value from among the first total fluence values, optionally in a predetermined energy range.

Such embodiments may advantageously provide first transport and activation computations before performing the second transport and activation computations, thereby allowing for more improved accuracy of determining fluence in sub-sub-volume(s) and/or improved accuracy of determining an activation value of the material(s) in said sub-sub-volume(s).

In particularly advantageous embodiments, the method or the step of determining (at least one portion of the) at least one of the first sub-volumes comprises selecting the at least one material from among the plurality of materials, comprised in the object, and/or from among isotopes of any of the plurality of materials, based on the first activation values, preferably based on one or more predetermined activation criteria. The step of determining at least one of the first sub-volumes comprises selecting at least one material or is based on the selected at least one material. Therefore, the step of selecting allows to consider a worst-case scenario of activated materials which may be comprised in the object. Thus, by performing first transport and activation computations which allow to perform the selecting of material(s), the method can advantageously allow to determine more accurately which material(s) induces certain particle emissions or creates daughter nuclides, and thereby allow to more accurately determine the sources of the activation value of said material(s) (e.g., dose or nuclides).This allows improving the splitting of the sub-volumes into sub-sub-volumes, thereby allowing for even more improved accuracy of determining fluence in sub-sub-volume(s) and/or improved accuracy of determining an activation value of the material(s) capable of being activated in said sub-sub-volume(s).

The method according to the present invention, particularly for determining at least one (second) activation value of at least one material, respectively, in (at least part of) the physical object may be intended for a technical purpose of performing dose optimization and/or decommissioning of at least one part of the object comprising the at least one material, particularly, at least part of the object relating to the at least one of the second sub-volumes, respectively. The method according to the present invention, particularly of determining at least one activation value of at least one material, respectively, in (at least part of) the physical object may be intended for a technical purpose of determining a hazard and/or a safety issue caused by (at least part of) the object comprising the at least one material, particularly, at least part of the object relating to the at least one of the second sub-volumes, respectively, and/or of designing of a nuclear installation comprising (at least one part of) the object comprising the at least one material, particularly, at least part of the object relating to the at least one of the second sub-volumes, respectively which may be intended for manufacturing.

According to a second aspect, the present invention provides a device comprising means for carrying out the method according to the invention.

According to a further aspect, the present invention provides a system comprising:

> the device according to the invention,
> (at least a part of) an object extending within a reference volume and comprising one or more materials, preferably a plurality of materials, wherein (the at least part of) the object defines an object volume, and
> a radiation source present in the reference volume, wherein at least one material based on the one or more materials, preferably the plurality of materials, is capable of being activated by the radiation source, wherein the device comprises a graphical user interface (GUI) configured to obtain information of the object volume and the radiation source,
> wherein the device comprises processing means configured to perform the steps of:

- defining a digital volume based on the object volume;
- splitting a portion of the digital volume into first sub-volumes based on the information of the radiation source;
- determining (at least one portion of) at least one of the first sub-volumes, respectively for splitting based on predetermined first activation values and/or predetermined first fluence values;
- splitting the determined (at least one portion of the) at least one of the first sub-volumes, respectively, into second sub-volumes;
- performing second transport computations to determine second fluence values in the second sub-volumes, respectively, wherein preferably the determined second fluence values consist of or comprise second differential fluence spectra; and
- performing second activation computations to determine the at least one activation value of the at least one material, respectively, in the second sub-volumes based on the determined second fluence values, preferably on the second differential fluence spectra, respectively.

Such a system may advantageously provide an improved combination of object and radiation source, which can allow for improved determination of activation value(s) of material(s) which can be activated by the radiation source and preferably which can allow for more efficient at least one of dose optimization and decommissioning of (the at least part) of the object, preferably sub-portions of (the at least part of) the object relating to the second sub-volumes. The method may advantageously allow for improved determining of a hazard and/or a safety issue caused by (at least part of) the object comprising the at least one material, particularly, at least part of the object relating to the at least one of the second sub-volumes, respectively, and/or of designing of a nuclear installation comprising (at least one part of) the object comprising the at least one material, particularly, at least part of the object relating to the at least one of the second sub-volumes, respectively, which may allow to provide a more improved combination of said object and radiation source.

According to a further aspect, the present invention provides a computer program comprising instructions which, when the program is executed by a computer, cause the computer to carry out the method according to the invention. The computer program product may comprise at least one readable medium in which computer-readable program code portions are saved, which program code portions comprise instructions for carrying out said method.

According to a further aspect, the present invention provides a computer-readable medium comprising instructions which, when executed by a computer, cause the computer to carry out the method according to the invention.

Preferred embodiments and their advantages are provided in the description and the dependent claims.

## Brief description of the drawings

The present invention will be discussed in more detail below, with reference to the attached drawings.

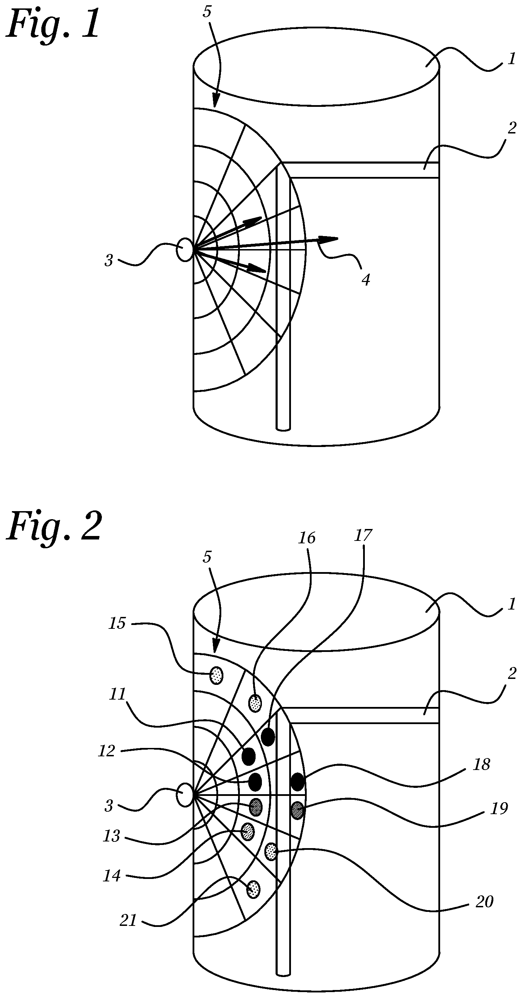

Fig. 1-5 show example embodiments of the method according to the invention.

## Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.
Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.
Furthermore, the various embodiments, although referred to as "preferred" are to be construed as exemplary manners in which the invention may be implemented rather than as limiting the scope of the invention.
The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.
In embodiments, there is provided a computer-implemented method of determining at least one activation value of at least one material, respectively, from among a plurality of materials comprised in an object extending within a reference volume, wherein the at least one material is capable of being activated by a radiation source present in the reference volume, wherein the object defines an object volume (1, 2), wherein the method comprises:

- defining a digital volume based on the object volume;
- splitting a portion of the digital volume into first sub-volumes based on information of the radiation source;

- determining at least one of the first sub-volumes for splitting based on predetermined first activation values and/or predetermined first fluence values;
- splitting the at least one of the first sub-volumes into second sub-volumes;
- performing second transport computations to determine second fluence values in the second sub-volumes, respectively, wherein preferably the determined second fluence values consist of or comprise second differential fluence spectra; and
- performing second activation computations to determine the at least one activation value of the at least one material, respectively, in the second sub-volumes based on the determined second fluence values, preferably on the second differential fluence spectra, respectively.

In this document, the term "reference volume" may refer to a conceptual or a physical space that serves as a reference point or standard for obtaining information (e.g., type, position, orientation, dimensions, etc.) of (at least a portion of) at least one object and of at least one radiation source within a larger system or environment. The reference volume can be thought of as a fixed or movable coordinate frame that provides a common reference system for tracking the object's properties and behavior. In this context, the reference volume may be defined by a set of boundaries, such as physical walls, surfaces, or axes, which define its shape, size, and orientation. The reference volume may be taken large enough so that the reference volume encompassing everything, such as the larger system or environment, and where (the at least a portion of) the at least one object and the at least one radiation source are comprised therein. The term "digital volume" may refer to a three-dimensional (3D) representation of a space or a matter, e.g., of the object within the reference volume, where each point within the defined boundaries is characterized by specific attributes such as location coordinates (x, y, z) and/or properties like material type, density, color, texture, or other relevant characteristics. The digital volume may be a 3D mesh, surface, or solid object which encompasses a specific region of space.

The term "material" relating to the one or more materials, preferably a plurality of materials, comprised in the object may refer to any material comprised therein, such as materials which are capable of being activated and optionally materials which are not capable of being activated. The material(s) capable of being activated may refer to substances which can absorb at least one of neutrons, photons, and other forms of radiation and become radioactive. This process is referred to as activation. The activation value of material may be quantified as an activity in units of Becquerels (Bq) or Curie (Ci) as the rate at which radioactive atoms decay and emit radiation, in activity per unit of mass or volume of the material, such as $Bq/g$, $Ci/kg$, $Bq/cm^3$, $Ci/m^3$, etc. Examples of materials comprised in the object include: elements of the periodic table, such as metals (e.g., Al, Cu, Fe, Pb, Mo, Ni, Ag, etc.) and non-metals (B, C, F, O, P, S, etc.); mixtures of elements, such as alloys (e.g., steel, red gold, white gold, brass, solder, pewter, duralumin, bronze, amalgams, etc.), or composite materials, such as ceramics (e.g., alumina, zirconia), composites (e.g., carbon fiber reinforced polymers, glass-reinforced polymers), gels (e.g., silica gel, polymer gels), glasses (e.g., borosilicate glass, soda-lime glass), hydrogels (e.g., agarose, polyacrylamide), membranes (e.g., semipermeable membranes, porous membranes), compounds, such as, oxides (e.g., $TiO_2$, $Al_2O_3$, $ZrO_2$, $H_2O_2$, $CO_2$, ferrite, etc.). In embodiments, the at least one material capable of being activated is selected from among the plurality of materials comprised in the object and/or preferably from among isotopes of the plurality of materials, such as one or more isotopes of each of the plurality of materials.

In embodiments, the object comprises one or more materials, preferably a plurality of materials, capable of being activated. In embodiments, the object consists of the one or more materials, preferably the plurality of materials, capable of being activated.

The term "object" may refer to any entity that has physical properties, such as position, orientation, dimensions, composition (e.g., materials comprised therein), etc., which are relevant to the system or environment and for which the at least one activation value of at least one material which is based on a plurality of materials comprised in the object is (to be) respectively determined. The object may be comprised within a system or environment that can interact with radiation (e.g., neutrons, photons). Such an object comprises or consists of one or more materials which can be activated by radiation, such that the one or more materials and/or one or more isotopes of said one or more materials can have a reaction with incident radiation and as an effect become radioactive. Examples of objects are structure elements, such as walls, floors, ceilings, beams, columns, or other structural elements that can comprise or consist of one or more materials capable of being activated by a radiation source; cooling systems, such as cooling pipes (e.g., within a structure element), comprising e.g., Copper, steel, etc.; control systems, such as control rods (comprising e.g., boron, cadmium, etc.); fuel assemblies, such as fuel rods or assemblies that contain fissile materials (e.g., uranium, plutonium); target components, such as target components comprised in particle accelerators or radiation therapy devices (comprising e.g., metal foils, wires, or other metal materials); containment vessels, such as large containers or tanks that house radioactive materials or systems (e.g., storage vessels for spent nuclear fuel); insulation materials, such as fiberglass, ceramic blankets, or refractory linings used to insulate components or systems from heat and radiation; cooling fluids, such as liquids or gases (e.g., water, air, helium) used to cool hot components or systems that can interact with radiation; radiation shielding comprising materials capable of activation, e.g., lead, steel, or concrete; and electrical components, such as wiring, cables, connectors, or other electrical components that might be affected by radiation or be designed to operate in high-radiation environments.

The term "radiation source" may refer to a source of radionuclide which emits ionizing radiation, typically one or more of the radiation types gamma rays, alpha particle, beta particles, neutron radiation, etc. The radiation source may be an irradiation source, such as for use in medicine for radiation therapy or in industry, such as industrial radiography, food irradiation, sterilization, etc.

The term "transport computation" may refer to one or more transport numerical methods, e.g., comprised in a radiation transport code, for simulating the transport of radiation through matter, tracking the movement and interactions of individual particles as they travel through a material. Examples of radiation transport codes include one or more Monte Carlo (MC) methods, such as MCN-Particle Transport code (MCNP), Geant4, beam delivery simulation (BDSIM), FLUKA, Particle and Heavy Ion Transport code System (PHITS), etc. Other examples may include SERPENT, OpenMC, and other variations thereof and of the MC transport codes. Thus, performing a transport computation may comprise performing the one or more transport numerical methods. An output of the transport computation is a fluence value, which may be used to determine the rate of reaction that can occur in the materials. In embodiments, the fluence value consist of or comprises a total fluence value and/or differential fluence values (e.g., a differential fluence spectrum). The total fluence value, $\Phi$ may refer to the total number of particles, $dN$, which have crossed a given surface per unit area of said surface, $da$, and may be determined as $\Phi = \frac{dN}{da}$ . In embodiments, the total fluence values comprise a total fluence intensity cloud, for example the first total fluence values are determined as a first total fluence intensity cloud. The differential fluence values or the differential fluence spectrum may refer to a number of energy particles incident on a given surface per energy and area of said surface in an energy interval, $[T, T+dT]$, and determined as $\Phi_T = \frac{d\Phi}{dT}$ .

The term "activation computation" may refer to one or more activation numerical methods, e.g., comprised in a radiation activation code, for simulating the activation value of a material by radiation, such as FISPACT II. Examples of MC codes that include one or more activation codes, are FLUKA, PHITS, etc. Other examples of radiation activation codes may include Oak Ridge Isotope Generation code (ORIGEN), or variations thereof and of the activation codes. Thus, performing an activation computation may comprise performing the one or more activation numerical methods. An output of the activation computation is an activation value, which may refer to the number of radioactive nuclei (atoms or molecules) present in a given volume or material after it has been exposed to radiation.

In embodiments, the step of splitting a portion of the digital volume into first sub-volumes based on information of the radiation source, particularly based on at least one of the following information of the radiation source, such as at least one of: location coordinates, a type, a direction, an emission pattern, and a size. The type of the radiation source may be any of: a point source, a line source, a beam source, an area source, a (finite) volume source, and an extended source. The direction of the radiation source may relate to the direction of the radiation from the source, e.g. with respect to the object or to one or more axes in the reference volume. The emission pattern may any of: Isotropic, partially isotropic and partially directional, directional, uniform, scattered, etc. The size of the radiation source may be less than 1 $mm^3$, between 1-10 $mm^3$, between 10-1000 $mm^3$, between 100-10,000 $cm^3$, more than 10,000 $cm^3$, etc.

In embodiments, the step of defining a digital volume comprises generating the digital volume, based on information, e.g., obtained from a user, of the components present in the reference volume, such as information of the physical object (e.g., attributes such as location coordinates (x, y, z) and dimensions and/or properties like material type, density, color, texture, or other relevant characteristics). Additionally, the digital volume may be defined/generated based on the information of the radiation source (e.g., location coordinates, type, direction, emission pattern, size).

In embodiments, the step of splitting a portion of the digital volume comprises determining the portion of the digital volume based on the information of the radiation source, such as at least one of: type of emitted particle(s) (e.g., one or more of: protons, alpha particles, beta particles, gamma rays, ion rays, neutron radiation, etc.), radiation source type, radiation source size, radiation source emission direction, etc. For example, the portion of the digital volume is determined using the inverse square law, where a lower fluence value is expected farther away from the radiation source. In another example, the portion of the digital volume is determined based on the Bragg curve or Bragg peak, where a higher fluence value is expected farther away from the radiation source. In embodiments, the step of splitting a portion of the digital volume comprises determining a first splitting pattern based on the information of the radiation source. The step of splitting a portion of the digital volume may be performed based on at least one of the determined portion of the digital volume and the determined splitting pattern. The first splitting pattern may be a mesh pattern or a grid pattern, such as a cylindrical mesh or a web mesh. For example, for a point source having an isotropic emission pattern, the first splitting pattern is determined to be a spherical mesh. For example, for a line source having a uniform emission pattern along its length, the first splitting pattern is determined to be a mesh of tetrahedron-shaped cells with the base of the tetrahedron facing in the direction of the radiation emission. For example, for a beam source having a focused emission pattern, the first splitting pattern is determined to be a mesh of cuboid-shaped cells. In embodiments, determining the splitting pattern includes determining dimensions of the first sub-volumes comprised therein. For example, the first splitting pattern may be determined as having first sub-volumes with larger dimensions the farther away from the radiation source and first sub-volumes with smaller dimensions the closer to the radiation source. In embodiments, the first sub-volumes have one or more of the following polygonal shapes: square-based pyramid, cube, tetrahedron, cuboid, polyhedral prism (e.g., triangular prism, square prism, rectangular prism, trapezoidal prism, hexagonal prism, etc.), etc. The polygonal shapes may include at least two elliptical arcs, e.g., the first sub-volumes in Figs. 1-5, each having a shape of a trapezoidal prism with at least four elliptical arcs. By combining more than one shape, e.g., one of the first sub-volumes has a quadrilateral shape and another of the first sub-volumes has a triangular shape, may allow to better determine the activation value of a material in a complex (portion of the) object, by ensuring that, in a more complex portion of the object a first shape for a first portion of the first sub-volumes is used, and in a less complex portion of the object a second shape for the second portion of the first sub-volumes is used. In embodiments, the first splitting pattern is a non-uniform pattern. For example, the first splitting mesh has first sub-volumes of different sizes. For example, the first splitting mesh has mixed element types.

In embodiments, the method comprises performing first transport computations to determine the first fluence values in the first sub-volumes, respectively.

In embodiments, the first fluence values comprises first differential fluence values (e.g., first differential fluence spectra) and/or first total fluence values. The first differential fluence values and/or the first total fluence values may be determined in a predetermined energy range. In embodiments, the energy range is determined based on an application area and/or based on the at least one of the activation criteria, such as a minimum and/or maximum relative radiation intensity. In embodiments, the energy range is provided by a user (e.g., via the GUI). The energy range may be determined based on at least one of an epithermal region, a thermal region, a radiation region (e.g., fast region, gamma ray region, etc.). Preferably, the energy range may be determined based on the radiation region. The energy may be between 0.1-1 keV, or 0.001-0.1 MeV, or more than 0.1 MeV, or more than 100 MeV, or more than 1 TeV, etc. For example, the energy range between 0.1 MeV to 300 MeV for radiation therapy and 1 MeV to 21 TeV is determined for an application in high-energy particle physics, such as CERN's Large Hadron collider. In another example the energy range between 0.1 eV and 0.1 keV is determined based on an application in materials science (e.g., study of electronic properties or defects in materials), biomedical research (e.g., medical imaging), environmental monitoring (e.g., air pollution monitoring), industrial processes (e.g., catalysis), etc.

In embodiments, the step of determining (at least one portion of) at least one of the first sub-volumes is based on the first fluence values, particularly on the first total fluence values. Preferably, the step of determining (at least one portion of) at least one of the first sub-volumes may be based on at least one of the first fluence values, particularly at least one of the first total fluence values relating to the at least one of the first sub-volumes, respectively, and exceeding a predetermined minimum total fluence threshold. The minimum total fluence threshold may be determined based on historically obtained or measured first total fluence values, such as based on a statistic of the historically obtained or measured first total fluence values (e.g., mean value). In embodiments, the determined first total fluence values are a point cloud of fluence intensity value, and the minimum total fluence threshold is determined as a relative intensity. In embodiments, the minimum total fluence threshold is determined as a percentage of the highest total fluence value from among the determined first total fluence values. Additionally or alternatively, the minimum total fluence threshold is determined as a percentage of the highest differential fluence value from among the determined first differential fluence values in the first differential fluence spectra. For example, the minimum total fluence threshold is determined based on a percentage of the highest of the total fluence values, such as 0.1%, 0.5%, 1%, 2%, 3%, 4%, 5%, 10%, 15%, 20%, 25%, 30%, 40%, 50%, 60%, 70%, 80%, 90%, etc. of the highest total fluence. The minimum total fluence and/or the percentage of the highest differential fluence value may be provided by the user (e.g., via the GUI). In embodiments, the at least one of the first sub-volumes relate to total fluence intensity points which have not been filtered out from the total fluence intensity point cloud, wherein the filtered out total fluence intensity points do not relate to the determined at least one of the first sub-volumes.

In embodiments, the step of splitting the at least one of the first sub-volumes is based on the first total fluence values relating to the first sub-volumes, respectively. Preferably, dimensions of the second sub-volumes are based on at least one of the first total fluence values relating to the at least one of the first sub-volumes, respectively. Additionally or alternatively, the dimensions of the second sub-volumes may be based on a predetermined maximum processing time and/or a predetermined minimum accuracy for determining the at least one activation value of the at least one material, respectively. In embodiments, a lower limit to the dimensions of the second sub-volumes is determined computational power of the device.

In embodiments, the step of determining at least one of the first sub-volumes comprises determining at least one portion of, preferably a portion of, the at least one of the first sub-volumes for splitting based on predetermined first activation values and/or predetermined first fluence values. In embodiments, the step of splitting the determined at least one of the first sub-volumes comprises splitting the at least one portion of, preferably the portion of, the at least one of the first sub-volumes into the second sub-volumes.

In embodiments, the step of splitting (the at least one portion of) the at least one of the first sub-volumes comprises determining a second splitting pattern based on the first total fluence values relating to the first sub-volumes, respectively. In embodiments, determining the splitting pattern includes determining dimensions of the second sub-volumes comprised therein. For example, the second splitting pattern may be determined as having second sub-volumes with larger dimensions in the first sub-volumes with lower first total fluence values, respectively, and second sub-volumes with smaller dimensions in the first sub-volumes with higher first total fluence values, respectively. The second splitting pattern may be a mesh pattern or a grid pattern, such as a cylindrical mesh or a web mesh. In embodiments, the second sub-volumes have one or more of the following shapes: triangular, quadrilateral (e.g., square, rectangular, pentagonal, hexagonal, etc.), or quadrilateral with at least two elliptical arcs. In embodiments, the shape and/or size of each of the second sub-volumes in a respective first sub-volume may be the same. The shape of portions of the second sub-volumes in a respective first sub-volume may be different. By combining more than one shape, e.g., one of the second sub-volumes has a quadrilateral shape and another of the second sub-volumes has a triangular shape, may allow to better determine the activation value of a material in a complex (portion of the) object, particularly in a complex first sub-volume, by ensuring that, in a more complex portion of a first sub-volume a first shape for a first portion of the second sub-volumes is used, and in a less complex portion of the first sub-volume a second shape for the second portion of the second sub-volumes is used. In embodiments, the second splitting pattern is a non-uniform pattern. For example, the second splitting mesh has second sub-volumes of different sizes. For example, the second splitting mesh having mixed element types. The shapes of the first sub-volumes compared to the second sub-volumes may be different or the same.

In embodiments, the method comprises performing first activation computations based on the first fluence values, preferably based on the first differential fluence spectra, to determine the first activation values of the plurality of materials, respectively, in at least one of the first sub-volumes based on at least one of the determined first fluence values, preferably on the at least one of determined first fluence values having the highest fluence value, respectively. In embodiments, the step of performing first activation computations comprises determining first reaction rates of the plurality of materials, respectively, in at least one of the first sub-volumes based on at least one of the determined first fluence values, preferably on the at least one of determined first fluence values having the highest fluence value, respectively.

In preferred embodiments, the method comprises performing first activation computations, based on the first fluence values, preferably based on the first differential fluence spectra, to determine the first activation values and/or the first reaction rates of the plurality of materials, respectively, in one of the first sub-volumes based on a respective one of the first total fluence values having the highest total fluence value from among the first total fluence values, preferably in the predetermined energy range. Additionally or alternatively, the first activation computations are performed for determining the first activation values and/or first reaction rates of the plurality of materials, respectively, in one of the first sub-volumes based on a respective one of the first differential fluence spectra having the highest differential fluence value from among the first differential fluence spectra, preferably in the predetermined energy range.

In embodiments, the method preferably the step of determining at least one of the first sub-volumes comprises selecting the at least one material from among the plurality of materials, based on the first activation values and/or the first reaction rates. The at least one material may be selected further from isotopes of one or more of the plurality of materials.

In embodiments, the step of selecting the at least one material is based further on one or more predetermined activation criteria. The activation criteria may comprise: a minimum and/or maximum relative radiation intensity (e.g., dose per Bq) of the at least one material, a minimum and/or maximum decay rate (e.g., half-life) of the at least one material, a minimum and/or maximum yield of the at least one material (e.g., abundance and/or activity of radioactive daughters produced by nuclear reactions), etc. Thus, the selected at least one material may comply with the one or more predetermined activation criteria. The one or more activation criteria may be provided by a user.

In embodiments, the step of determining (at least one portion of) at least one of the first sub-volumes to be split into second sub-volumes based on the determined first activation values and/or the determined first reaction rates, preferably based on the selected at least one material. A respective location of a selected material comprised in the object may be determined based on the predetermined or known location(s) of the plurality of materials comprised in the object. Thus, the at least one of the first sub-volumes, preferably the at least one portion thereof, may be determined based on the location of the selected at least one material, preferably based on the location of the respective at least one of the plurality of materials (i.e., based on the at least one of the first sub-volumes, preferably the at least one portion thereof, in which the selected at least one material is comprised). For example, a selected material is an isotope of one of the plurality of materials comprised in the object, has the same location thereof, i.e., is comprised in the same first sub-volume(s).

In embodiments, the step of determining (at least one portion of) at least one of the first sub-volumes for splitting into second sub-volumes is based on the determined first fluence values, preferably the respective total fluence values related to the first sub-volumes exceeding the predetermined minimum total fluence threshold, and on the determined first activation values and/or determined first reaction rates, preferably based on the selected at least one material. The step of determining the respective total fluence values related to the first sub-volumes exceeding the predetermined minimum total fluence threshold and the step of selecting at least one material may be performed in any order. In embodiments, the step of determining the respective total fluence values related to the first sub-volumes exceeding the predetermined minimum total fluence threshold and the step of selecting at least one material are performed in parallel. This can speed up the process of determining the activation value of the at least one material capable of being activated.

In embodiments, the step of determining at least one of the first sub-volumes for splitting into second sub-volumes comprises determining at least one portion of the at least one of the first sub-volumes, respectively, based on the selected at least one material, wherein the step of splitting the at least one of the first sub-volumes comprises splitting the determined at least one portion of the at least one of the first sub-volumes, respectively, into second sub-volumes. For example, a determined portion of a first sub-volume comprises a selected material, and therefore, only said portion of the first sub-volume is split into second sub-volumes. This allows to reduce the amount of computation performed in the second transport and activation values computations, thereby, reducing the amount of memory needed to perform the computations and the power used by the processor.

In embodiments, the method comprises performing second transport computations to determine second fluence values in the second sub-volumes, respectively; and performing second activation computations to determine the at least one activation value of the at least one material, respectively, in the second sub-volumes based on the determined second fluence values, respectively. In embodiments, the determined second fluence values comprise determined second differential fluence spectra, preferably consist of the determined second differential fluence spectra. In embodiments step of performing second activation computations to determine the at least one activation value of the at least one material, respectively, in the second sub-volumes is based on the differential fluence spectra, respectively. In embodiments, the at least one activation is determined in the predetermined energy range. The predetermined energy range can advantageously reduce the range of the determined activation value to a more desired energy range which may be determined based on any of: the application area, the at least one activation criteria, and the user's input.

In embodiments, the method comprises determining at least one clearance index based on the determined at least one activation, respectively. The step of determining at least one clearance index may be further based on at least one predetermined clearance value. The clearance index may refer to the activity per unit mass divided by a clearance value, to determine whether an object or material can be cleared for release. The clearance value may refer to an activation threshold, which may be determined based on guidelines for activated material decommissioning, e.g., according to the International Atomic Energy Agency and may represent the maximum allowed concentration in a material.

In embodiments, the method comprises performing dose optimization and/or decommissioning of at least one part of the object relating to the at least one of the second sub-volumes, respectively, based on the determined at least one activation value. Preferably, the step of performing dose optimization and/or decommissioning may be based on the determined at least one activation value. Dose optimization may refer to the process of minimizing an amount of radiation exposure of the (activated) at least one material, such as by modifying the design of (the at least part of) the object, e.g., by adding/changing materials to/of the at least one material in the object or optimizing the geometry of the object. Decommissioning may refer to the process of dismantling of (the at least one part of) the object which has reached an activation greater than or equal to the predetermined activation threshold and/or which has a clearance index greater than or equal to 1. In embodiments, the method comprises determining whether the clearance index is greater than or equal to 1. Upon determining that the clearance index is greater than or equal to 1, performed dose optimization and/or decommissioning of said at least one part of the object relating to the at least one of the second sub-volumes, respectively. In embodiments, the method comprises determining whether any of the determined at least one activation value exceeds the activation threshold or the clearance value, such as greater than 20 Bq/cm$^3$, greater than 10 Bq/cm$^3$, greater than 5 Bq/cm$^3$, greater than 1 Bq/cm$^3$, greater than 0.1 Bq/cm$^3$, etc. For example, typical radiological waste may have a clearance value of around 10-20 Bq/cm$^3$, and special nuclear materials (e.g., reactor fuel), may have clearance value of around 0.1-1 Bq/cm$^3$. Whereas a contaminated building may have a clearance value of 500 Bq/cm$^3$ and would require extensive decontamination and decommissioning before being released from controlled areas if the activation value is not brought below the clearance value, and a piece of equipment may have a clearance value of 50 Bq/cm$^3$ and would need to be dismantled, cleaned, or replaced if the activation value is not brought below the clearance value.

In embodiments, at least one of the one or more predetermined activation criteria, the predetermined maximum processing time, the predetermined minimum accuracy (e.g., minimum dimensions of the at least one second sub-volumes), the predetermined activation threshold, the predetermined energy range, and the predetermined minimum total fluence threshold is provided by the user.

In embodiments, the method comprises redefining the digital volume based on the determined at least one activation value, and performing at least the steps of splitting a portion of the redefined digital volume, determining at least one of the first sub-volumes, splitting the determined at least one of the first sub-volumes, performing second transport computation and performing second activation computations, based on the redefined digital volume. In embodiments, the method comprises determining a digital volume for which the determined at least one activation value is highest from among determined activation values relating to a plurality of digital volumes. It should be understood that (the at least part of) the object is intended to be manufactured based on the determined digital volume, e.g. for a nuclear installation. In embodiments, the method comprises manufacturing (the at least part of) the object based on the determined digital volume.

In embodiments, the method comprises generating a message based on the determined at least one (second) activation value. The message may comprise at least one of the determined at least one activation value, the determined clearance index, and at least one of instructions, suggestions, and recommendations based on the determined at least one activation value. The at least one of instructions, suggestions, and recommendations may comprise at least one of: an amount of time a person can be close to the activated material or the activated (at least part of) the object; a minimum distance a person can be to the activated material or the activated (at least part of) the object; a minimum number of people needed and/or a maximum number of people allowed to perform dose optimization and/or decommissioning; a change in (the at least part of) the object, such as a change in volume thereof or a change of the digital volume.

According to a further aspect, the present invention provides a device comprising means for determining at least one activation value of at least one material, respectively, from among a plurality of materials comprised in an object extending within a reference volume according to the invention.

In embodiments, the means comprised in the device concern at least one (micro) processor. In embodiments, the device is an edge computing device or a (cloud) server.

In embodiments, the device comprises a display module for displaying the determined second fluence values and/or the determined at least one activation value. In embodiments, the display module is configured for displaying the generated message to a user.

In embodiments, the device according to the present invention comprises graphical user interface (GUI) for allowing the user to provide input, such as the at least one of the one or more predetermined activation criteria, the predetermined maximum processing time, the predetermined minimum accuracy (e.g., minimum dimensions of the at least one second sub-volumes), the one or more predetermined activation threshold, the predetermined energy range, and the predetermined minimum total fluence threshold.

According to a further aspect, the present invention provides a computer-readable medium comprising instructions which, when executed by a computer, cause the computer to carry out the method of determining at least one activation value of at least one material, respectively, from among a plurality of materials comprised in an object extending within a reference volume according to the invention.

In embodiments, the computer-readable medium is a non-transient computer readable medium containing a computer executable software which when executed on a computer system performs the method as defined herein before by the embodiments of the present disclosure. A non-transient computer readable medium may include an electrical connection having one or more wires, a portable computer diskette, a hard disk, a random-access memory (RAM), a read-only memory (ROM), an erasable programmable read-only memory (EPROM or flash memory), a portable compact disc read-only memory (CD-ROM), an optical storage device, a magnetic storage device, or any suitable combination of the foregoing. In the context of this document, a non-transient computer readable medium may be any tangible medium that can contain or store a program for use by or in connection with an instruction execution system, apparatus, device or module.

**Example**

Example embodiments of the invention will be described with reference to Fig. 1-5, which are not intended to limit the scope of the invention in any way. Fig. 1-5 illustrate a reference volume comprising a radiation source (3) and an object comprising a wall and a pipe. In this example, a part of the object defines an object volume (1, 2) comprising a first object volume (1) relating to part of the wall comprised in the part of the object and a second object volume (2) relating to part of the pipe comprised in the part of the object. The materials comprised in the part of the object comprise concrete/cement, air, and steel, particularly concrete/cement and air in the part of the wall, and steel in the part of the pipe.

In example embodiments, the method comprises defining a digital volume based on the object volume (1, 2). In this case, digital volume may be defined based on the attributes of the part of the object, such as location coordinates and dimension, and preferably materials comprised in the part of the object.

The method further comprises splitting a portion of the digital volume into first sub-volumes (5) based on information of the radiation source (3). As can be seen in Fig. 1, the radiation source (3) is a point radiation source, has an isotropic emission pattern (4), and is located at a negligible distance from the object, i.e., in contact with the object.

In this example, the first splitting pattern is determined to be a spherical mesh (e.g., a web mesh) of first sub-volumes (5) each having a shape of a trapezoidal prism with at least four elliptical arcs. In Fig. 1-5, for simplicity, the spherical mesh is shown as a 2D mesh, and the first sub-volumes are shown as 2D trapezoids with two elliptical arcs.

The method further comprises performing first transport computations to determine the first fluence values in the first sub-volumes (5), respectively, wherein the first fluence values comprise first total fluence values and first differential fluence spectra. As shown in Fig. 2, the total fluence values (11-21) of the respective of the first sub-volumes (5) and are visualized as filled circles. This visualization represents the first total fluence intensity point cloud. The more the circle is filled the higher the determined first total fluence value. The first total fluence values (15, 16, 20, 21) are determined to be very low total fluence values, the total fluence (14) is determined to be a low total fluence value, the total fluence values (13, 19) are determined to be high total fluence values, the total fluence values (11, 12, 17, 18) are determined to be very high total fluence values.

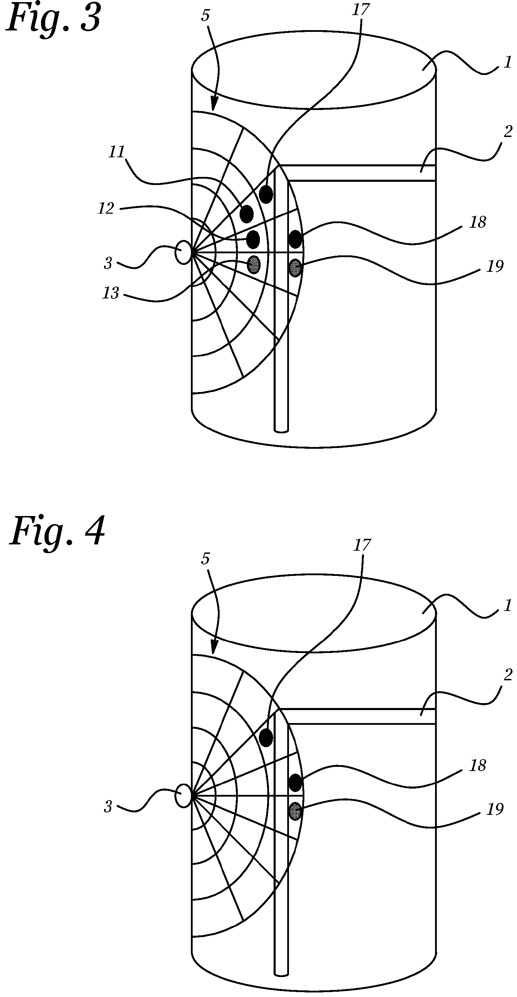

The method further comprises determining at least one of the first sub-volumes (5) for splitting based on the determined first fluence values, particularly on the determined first total fluence values. The step of determining at least one of the first sub-volumes (5) for splitting may be based on at least one first total fluence values of the at least one of the first sub-volumes (5), respectively, exceeding a predetermined minimum total fluence threshold. In this case, the predetermined minimum total fluence threshold is higher than the very low and low total fluence values of the first total fluence values (14-16, 20, 21), and lower than the high and very high total fluence values of the first total fluence values (11-13, 17-19). Thus, as shown in Fig. 3, the first total fluence values (11-13, 17-19) which exceed the predetermined minimum total fluence threshold are determined as the at least one of the first sub-volumes (5) for splitting. This is visualized as filtering out the other (14-16, 20, 21) of the first total fluence values (11-13, 17-19), which exceed the predetermined minimum total fluence threshold, from the total fluence intensity point cloud, wherein the filtered out total fluence intensity points (14-16, 20, 21) do not relate to the determined at least one of the first sub-volumes.

The method further comprises performing first activation computations to determine the first activation values of the plurality of materials, respectively, in one of the first sub-volumes (5) based on a respective one of the first total fluence values having the highest total fluence value from among the first total fluence values. Thus, any one of the first sub-volumes (5) with the determined first total fluence values (11, 12, 17, 18) may have the highest total fluence value. In this example, it is determined that the first sub-volume with the first total fluence (17) has the highest total fluence value from among all the determined fluence values (11-21), particularly the determined total fluence values. Thus, the first activation computation is performed for each material and respective isotopes thereof in the first cub-volume with the first total fluence (17).

The method further comprises selecting the at least one material capable of being activated from among the plurality of materials and isotopes thereof, based on the first activation values, preferably further based on one or more predetermined activation criteria. In other words, the selected at least one material may comply with the one or more predetermined criteria. For example, the one or more predetermined criteria comprise: a nuclide which emits gamma radiation of about 1 MeV and having a decay life of above 1 second. In another example a predetermined criterium is the material having the largest radiation dose.

The step of determining at least one portion of at least one of the first sub-volumes (5) is based on the selected at least one material. Thus, as shown in Fig. 4, the first sub-volumes (5) which comprise the selected at least one material are the first sub-volumes with respective total fluence values (17-19). This is visualized as filtering out the other (11-13) of the first total fluence values (17-19), which comprise the selected at least one material, from the total fluence intensity point cloud, wherein the filtered out total fluence intensity points (11-13) do not relate to the determined at least one of the first sub-volumes.

It must be noted that although in this example the step of determining the respective first total fluence values exceeding the predetermined minimum total fluence threshold is performed before the step of selecting the at least one material, the step of determining at least one portion of at least one of the first sub-volumes (5), i.e., with respective total fluence values (17-19), for splitting is based on any order of the steps of selecting at least one material and determining the respective first total fluence values exceeding the predetermined minimum total fluence threshold, such as said steps being performed in parallel.

As is understood from this example, the selected material is steel comprised in the steel pipe, which defines the object volume (2). Thus, the determined at least one portion relates to an intersection between object volume (2) of the steel pipe and the first sub-volumes (5) with respective total fluence values (17-19).

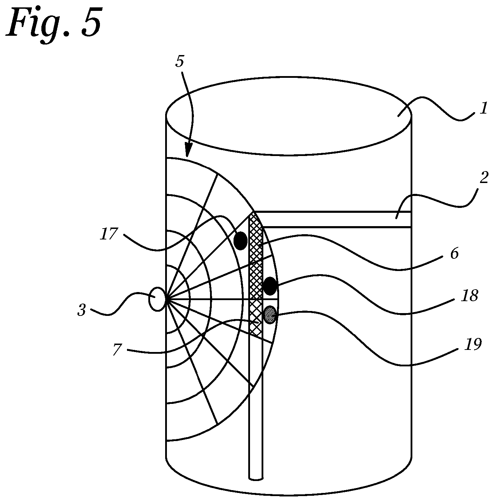

The method further comprises splitting the at least one portion of the at least one of the first sub-volumes (5), respectively, into second sub-volumes (6, 7). In this example, the second sub-volumes (6, 7) are in a grid splitting pattern. As can be seen in Fig. 5, a portion of the first sub-volume with first total fluence (17) and a portion of the first sub-volume with first total fluence (18) are split into second sub-volumes (6) of same size. A portion of the first sub-volume with first total fluence (19) is split into second sub-volumes (7). Since, the first total fluence values (17, 18) are determined to be very high, i.e., higher than the first total fluence (16), the dimensions of the second portions (6) are larger than those of the second portions (7).

The method further comprises performing second transport computations to determine second fluence values in the second sub-volumes (6, 7), respectively, wherein preferably the determined second fluence values consist of differential fluence spectra; and performing second activation computations to determine the at least one activation value of the at least one material, respectively, in the second sub-volumes (6, 7) based on the determined second fluence values, respectively.

(End of Example)

Although the present invention has been described above with reference to certain embodiments thereof, it will be evident that various modifications and changes may be made to these embodiments without departing from the broader scope of the present invention, as defined by the appended claims.

**Claims**

1.    A computer-implemented method of determining at least one activation value of at least one material, respectively, based on a plurality of materials comprised in an object extending within a reference volume, wherein the at least one material is capable of being activated by a radiation source (3) present in the reference volume, wherein the object defines an object volume (1, 2), wherein the method comprises:

   - defining a digital volume based on the object volume (1, 2);
   - splitting a portion of the digital volume into first sub-volumes (5) based on information of the radiation source (3);
   - determining at least one of the first sub-volumes (5) for splitting based on predetermined first activation values and/or predetermined first fluence values;
   - splitting the determined at least one of the first sub-volumes (5) into second sub-volumes (6, 7);
   - performing second transport computations to determine second fluence values in the second sub-volumes (6, 7), respectively, wherein preferably the determined second fluence values consist of second differential fluence spectra;
   and
   - performing second activation computations to determine the at least one activation value of the at least one material, respectively, in the second sub-volumes (6, 7) based on the determined second fluence values, respectively.

2.    The method according to claim 1, further comprising:

   - performing first transport computations to determine the first fluence values in the first sub-volumes (5), respectively, wherein the first fluence values comprise first differential fluence spectra and/or first total fluence values; and
   - performing first activation computations based on the first differential fluence spectra to determine the first activation values of the plurality of materials and isotopes thereof, respectively, in one of the first sub-volumes (5) based on a respective one of the first fluence values having the highest fluence value.

3.    The method according to claim 2, wherein the step of performing first activation computation to determine the first activation values in one of the first sub-volumes (5) is based on a respective one of the first total fluence values having the highest total fluence value from among the first total fluence values in a predetermined energy range.

4.    The method according to claim 2 or claim 3, wherein the step of splitting the determined at least one of the first sub-volumes (5) is based on the respective first total fluence values of the at least one of the first sub-volumes (5), such that dimensions of the second sub-volumes (6, 7) are based on at least one of the first total fluences of the at least one of the first sub-volumes, respectively.

5.    The method according to claim 4, wherein the step of determining at least one of the first sub-volumes (5) comprises determining a portion of the at least one of the first sub-volumes (5) for splitting, wherein the step of splitting the determined at least one of the first sub-volumes (5) comprises splitting the portion of the at least one of the first sub-volumes (5) into the second sub-volumes (6, 7).

6.    The method according to claims 2-5, wherein the step of determining at least one of the first sub-volumes (5) is based on at least one of the first total fluences relating to the at least one of the first sub-volumes (5), respectively, wherein the at least one of the first total fluences exceeds a predetermined minimum total fluence threshold.

7.    The method according to claims 1-6, wherein the step of determining at least one of the first sub-volumes comprises selecting the at least one material from among the plurality of materials and isotopes thereof, based on the first activation values.

8. The method according to claim 7, wherein the step of selecting the at least one material is based on one or more predetermined activation criteria relating to a minimum and/or maximum relative radiation intensity, a minimum and/or maximum decay rate, and a minimum and/or maximum yield of the at least one material.

9. The method according to claims 1-8, wherein the step of determining at least one of the first sub-volumes (5) comprises determining at least one portion of the at least one of the first sub-volumes (5), respectively, based on the selected at least one material,
wherein the step of splitting the at least one of the first sub-volumes (5) comprises splitting the determined at least one portion of the at least one of the first sub-volumes (5), respectively, into second sub-volumes (6, 7).

10. The method according to claims 1-9, wherein dimensions of the second sub-volumes (6, 7) are based on a predetermined maximum processing time and/or a predetermined minimum accuracy for determining the at least one activation value of the at least one material, respectively.

11. The method according to claims 1-10, comprising determining at least one clearance index based on the determined at least one activation value and at least one predetermined clearance value, respectively.

12. The method according to claim 11, comprising performing dose optimization and/or decommissioning of at least one part of the object relating to the at least one of the second sub-volumes (6, 7), based on the determined at least one clearance index, respectively.

13. A device comprising means for carrying out the method according to claims 1-12.

14. A computer program comprising instructions which, when the program is executed by a computer, cause the computer to carry out the method according to claims 1-12.

15. A computer-readable medium comprising instructions which, when executed by a computer, cause the computer to carry out the method according to claims 1-12.

*Fig. 1*

*Fig. 2*

*Fig. 3*

*Fig. 4*

## Fig. 5

Europäisches
Patentamt
European
Patent Office
Office européen
des brevets

**EUROPEAN SEARCH REPORT**

Application Number

EP 24 19 7336

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAMOISIAUX E ET AL: "Self-consistent numerical evaluation of concrete shielding activation for proton therapy systems", THE EUROPEAN PHYSICAL JOURNAL PLUS, SPRINGER BERLIN HEIDELBERG, BERLIN/HEIDELBERG, vol. 137, no. 8, 4 August 2022 (2022-08-04), XP037926768, DOI: 10.1140/EPJP/S13360-022-02960-9 [retrieved on 2022-08-04] * abstract * * section 3.2.1 par.1 * * figures 13,14,16,25 * * penultimate par.; page 11 * * page 11, last paragraph * * page 12, paragraph 3 * * section 5 par.1 * * section 5.1 par.1 * * section 6. pars.2-3 * * page 3, last paragraph * * first par. and penultimate par.; page 19 * * tables 1,3,5 * * section 3, par.2 * * section 5.3 par.2 * * section 4, par.3 * * the whole document * | 1-15 | INV. G06F30/25 ADD. G06F111/10 G06F119/04 |

-----

TECHNICAL FIELDS SEARCHED (IPC)

G06F

The present search report has been drawn up for all claims

| Place of search | Date of completion of the search | Examiner |
|---|---|---|
| Munich | 22 January 2025 | Dapp, Wolfgang |

EPO FORM 1503 03.82 (P04C01)

**REFERENCES CITED IN THE DESCRIPTION**

**Patent documents cited in the description**

- CN 115130363 A